# EUROPEAN PATENT APPLICATION

(11) **EP 3 988 976 A1**
(43) Date of publication of application: **27.04.2022**
(21) Application number: 19933550.6
(22) Date of filing: 13.12.2019
(51) Int. Cl.: G02B 6/44

(54) **BINDING-YARN-LAYER-FREE STRANDED OPTICAL CABLE AND MANUFACTURING METHOD THEREFOR**

(30) Priority: 21.06.2019 CN 201910543858
(71) Applicant: Fiberhome Telecommunication Technologies Co., Ltd, Wuhan, Hubei 430000 (CN); Xinjiang Fiberhome Optical Communications Co., Ltd, Wujiaqu, Xinjiang 831300 (CN)
(72) Inventor: QIAN, Feng, Wuhan, Hubei 430000 (CN); HE, Maoyou, Wuhan, Hubei 430000 (CN); WANG, Long, Wuhan, Hubei 430000 (CN); LIU, Xiaohong, Wuhan, Hubei 430000 (CN); LIU, Xuan, Wuhan, Hubei 430000 (CN); ZHANG, Gang, Wuhan, Hubei 430000 (CN); CHEN, Shouqing, Wuhan, Hubei 430000 (CN); SI, Shuai, Wuhan, Hubei 430000 (CN); GUO, Kun, Wuhan, Hubei 430000 (CN)
(74) Representative: Kuhnen & Wacker Patent- und Rechtsanwaltsbüro PartG mbB
(86) International application number: PCT/CN2019/124969
(87) International publication number: WO 2020/253158

(57) **Abstract**

Provided are a binding-yarn-layer-free stranded optical cable and a manufacturing method therefor. The optical cable comprises a central reinforcing member (1), at least one first water-blocking yarn (2), a cable core (3), a water-blocking element (7) and an outer sheath (8), wherein the first water-blocking yarn (2) is wrapped around the outer surface of the central reinforcing member (1); the cable core (3) is arranged at the outer surface of the central reinforcing member (1), and the cable core (3) comprises m loose tubes (4) and n filler ropes (5), which are SZ stranded, m being greater than or equal to one, n being greater than or equal to zero, and the loose tubes (4) containing 1 to 48 optical fibers (6); the outer sheath (8) is arranged on the outer side of the cable core (3); and the water-blocking element (7) is arranged between the cable core (3) and the outer sheath (8). The binding-yarn-layer-free stranded optical cable has no binding yarns because a yarn binding process is omitted from the manufacturing process, thereby preventing the loose tubes from spreading and the outer diameter of the optical cable from being changed when the tension of the binding yarn is too small, and preventing the loose tubes from being flattened when the tension of the binding yarn is too large, resulting in the excessive transmission attenuation of the optical fiber.

## Description

### Field of the Invention

The present invention relates to the technical field of optical communication transmission technology, in particular to a binding-yarn-layer-free stranded optical cable and a manufacturing method therefor.

### Background of the Invention

With the advent of the 5G era, optical fiber communications will be fully deployed under the premise of network upgrades due to the advantages of low cost and high efficiency. However, the optical cable laying pipeline has limited resources, and the optical cable structure needs to be developed in the direction of high density and miniaturization. At the same time, for the purpose of clean construction, the application of dry optical cables without grease is becoming more and more widespread.

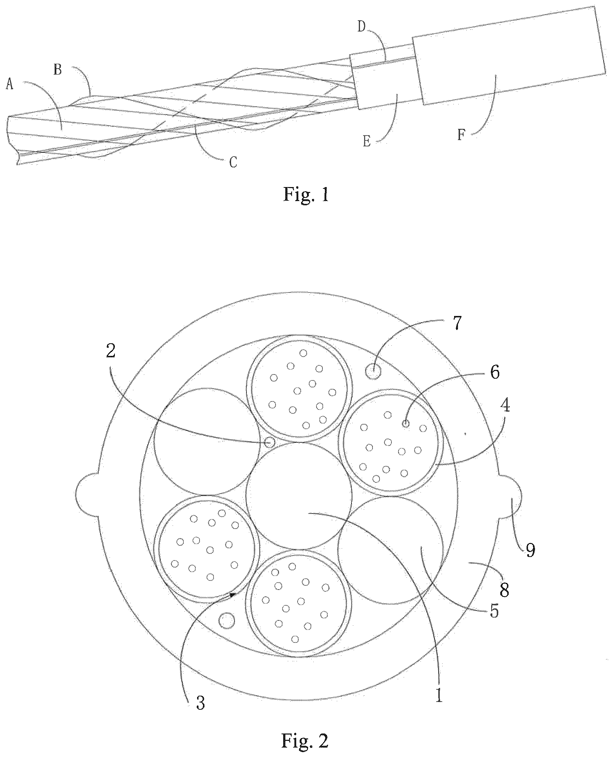

In the manufacturing process of traditional layer stranded optical cables, loose tubes need to be stranded together in S-type and SZ-type so as to strengthen the tensile performance of the optical cable, reduce the number of strength components, and save the cost of optical cable manufacturing. At present, SZ stranding method is usually used for producing. The loose tube A is stranded together by rotation in a reciprocating left and right direction at a certain frequency, and finally bundled with a binging-yarn B to form the cable core of the optical cable, as shown in Fig. 1.

As the structure of the optical cable decreases, the size of the loose tube is also continuously reduced, and the wall thickness is getting thinner and thinner; because the dry optical cable uses water-blocking yarn instead of grease, the inner side of the loose tube lacks support. In the production process of manufacturing cables through SZ stranding, the fluctuation of the binding-yarn tension will affect the quality of the loose tube. When the binding-yarn tension is too small, the loose tube will spread out and the outer diameter will be changed. When the binding-yarn tension is too large, the loose tube will be flattened, which will result in the excessive transmission attenuation of the optical fiber.

### Summary of the Invention

In view of the defects existing in the prior art, the purpose of the present invention is to provide a binding-yarn-layer-free stranded optical cable and a manufacturing method therefor. The optical cable has no binding yarns because a yarn binding process is omitted from the manufacturing process, thereby preventing the loose tubes from spreading out and the outer diameter of the optical cable from being changed when the tension of the binding yarn is too small, and preventing the loose tubes from being flattened (which will result in the excessive transmission attenuation of the optical fiber) when the tension of the binding yarn is too large.

In order to achieve the above purpose, the present invention adopts the following technical solution: a binding-yarn-layer-free stranded optical cable, comprising:
a central reinforcing member;
at least one first water-blocking yarn, which is wrapped around the outer surface of the central reinforcing member;
a cable core, which is arranged at the outer surface of the central reinforcing member, and comprises m loose tubes and n filler ropes, which are SZ stranded, wherein m≥1, n≥0, and the loose tube contains 1 to 48 optical fibers;
an outer sheath, which is arranged on the outer side of the cable core; and
a water-blocking element, which is arranged between the cable core and the outer sheath.

Further, the water-blocking element adopts a second water-blocking yarn.

Further, when the number of the second water-blocking yarn is not less than two, the second water blocking yarn is evenly distributed along the circumferential direction of the cable core.

Further, the water-blocking element adopts a water-blocking tape.

Further, the number m of the loose tubes is 6, and the number n of the filler ropes is 0; or the number m of the loose tubes is 4, and the number n of the filler ropes is 2.

Further, the outer surface of the outer sheath is convexly provided with a cable opening marking line, and the cable opening marking line extends axially along the outer sheath.

Further, the materials used for the central reinforcing member comprise a single metal or a fiber reinforced polymer FRP.

Further, the loose tube adopts a dry type or a grease-filled loose tube.

Further, the materials used for the loose tube comprise at least one of polybutylene terephthalate PBT, polycarbonate PC, polypropylene PP, polyethylene terephthalate PET, and thermoplastic polyester elastomer TPEE.

Further, the materials used for the outer sheath comprise polyethylene PE, polyvinyl chloride PVC, polyurethane TPU, polyamide PA or low smoke zero halogen flame retardant polyolefin LZSH.

The present invention further provides a method for manufacturing a binding-yarn-layer-free stranded optical cable, comprising the following steps:
discharging the central reinforcing member from a reinforcement pay-off rack;
discharging the first water-blocking yarn by rotation from a first yarn-putting rack, wrapping around the central reinforcing member, and the central reinforcing member wrapped with the first water-blocking yarn entering a center hole of a stranding machine;
respectively discharging m loose tubes and n filler ropes from a loose tube pay-off rack and a filler rope pay-off rack, and successively and parallelly passing through a stranding plate and a stranding head of the stranding machine;
performing SZ reciprocating rotation on the stranding plate and the stranding head, and stranding the loose tubes and the filler ropes into the cable core, and the cable core being located on the outer surface of the central reinforcing member;
providing a negative pressure pumping mould between the stranding head and an extruder head;
discharging the water-blocking element from a second yarn-putting rack, passing the water-blocking element through the negative pressure pumping mould and parallelly entering the extruder head with the cable core;
starting a negative pressure pumping fan, pumping the inside of the extruder head to negative pressure, starting an extruder, extruding the material of the molten outer sheath from the extruder head and coating on the cable core and the water-blocking element to form the outer sheath, thereby obtaining the optical cable.

Further, the method comprises the following steps:
cooling and shaping the optical cable through a water channel and drying; and
pulling the optical cable to a take-up reel to wind up.

Compared with the prior art, the present invention has the following advantages.

The present invention cancels the SZ stranded binding-yarn process, which can save the cost of the binding yarn, and at the same time can prevent the loose tubes from spreading out and the outer diameter of the optical cable from being changed when the tension of the binding yarn is too small, and prevent the loose tubes from being flattened and the transmission attenuation of the optical fiber from exceeding when the tension of the binding yarn is too large.

The present invention combines the stranding process and the sheathing process, saving one production process, compressing the production site, and reducing equipment cost and labor cost.

When the outer sheath is extruded, the cable opening marking line can be extruded directly, which can save the cost of cable opening.

### Description of the Drawings

Fig. 1 is a structural schematic diagram of a conventional layer stranded optical cable in the prior art;
Fig. 2 is a schematic cross-sectional view of the binding-yarn-layer-free stranded optical cable in one embodiment of the present invention;
Fig. 3 is a schematic cross-sectional view of the binding-yarn-layer-free stranded optical cable in another embodiment of the present invention;
Fig. 4 is a schematic cross-sectional view of the binding-yarn-layer-free stranded optical cable in another embodiment of the present invention;
Fig. 5 is a schematic cross-sectional view of the binding-yarn-layer-free stranded optical cable in another embodiment of the present invention;
Fig. 6 is an axial schematic diagram of the binding-yarn-layer-free stranded optical cable in the embodiment of the present invention;
Fig. 7 is a manufacturing flow chart of the binding-yarn-layer-free stranded optical cable in the embodiment of the present invention.

In the figures:
A-loose tube; B-binding yarn; C-water-blocking yarn; D-cable opening line; E-water-blocking tape; F-outer sheath.

1-central reinforcing member; 2-the first water-blocking yarn; 3-cable core; 4-loose tube; 5-filler rope; 6-optical fiber; 7- water-blocking element; 8-outer sheath; 9-cable opening marking line; 10-reinforcement paying-off rack; 11-the first yarn-putting rack; 12-stranding machine; 13-loose tube paying-off rack; 14-filler rope paying-off rack; 15-stranding plate; 16-stranding head; 17-extruder head; 18-negative pressure pumping mould; 19-the second yarn-putting rack; 20-extruder; 21-negative pressure pumping fan; 22-water channel; 2-dryer; 24-printer; 25-take-up tractor; 26-take-up reel; 27-torsion damper.

### Detailed Description of the Embodiments

The present invention will be further described below in detail with reference to the drawings in combination with the embodiments.

As shown in Fig. 2, the first embodiment of the present invention provides a binding-yarn-layer-free stranded optical cable, comprising a central reinforcing member 1, at least one first water-blocking yarn 2, a cable core 3, a water-blocking element 7 and an outer sheath 8. The central reinforcing member 1 is made of a single metal or a fiber reinforced polymer FRP. The first water-blocking yarn 2 is wrapped around the outer surface of the central reinforcing member 1; when there is a plurality of the first water-blocking yarns, the first water-blocking yarns are evenly distributed along the circumferential direction of the central reinforcing member 1. The cable core 3 is arranged at the outer surface of the central reinforcing member 1. The cable core 3 comprises m loose tubes 4 and n filler ropes 5, which are SZ stranded, and m loose tubes 4 and n filler ropes 5 surround the outer surface of the central reinforcing member 1 and approximately form a perfect circle. It can be seen from Fig. 2 that the diameters of the loose tube 4 and the filler rope 5 are approximately the same, and the centers of the loose tube 4 and the filler rope 5 are at the same circle, where m≥1, n≥0. The loose tube 4 adopts a dry type or a grease-filled loose tube, and the materials used for the loose tube comprise at least one of polybutylene terephthalate PBT, polycarbonate PC, polypropylene PP, polyethylene terephthalate PET, and thermoplastic polyester elastomer TPEE. The loose tube 4 contains 1 to 48 optical fibers 6. The outer sheath 8 is arranged on the outer side of the cable core 3. The water-blocking element 7 is arranged between the cable core 3 and the outer sheath 8. The materials used for the outer sheath comprise polyethylene PE, polyvinyl chloride PVC, polyurethane TPU, polyamide PA or low smoke zero halogen flame retardant polyolefin LZSH. The outer surface of the outer sheath 8 is convexly provided with a cable opening marking line 9, which extends axially along the outer sheath 8. The number of the cable opening marking line 9 can be arranged several such as 2 or 4, and arranged uniformly along the circumferential direction of the outer sheath 8.

As shown in Fig. 2, the second embodiment of the present invention provides a binding-yarn-layer-free stranded optical cable, comprising a central reinforcing member 1, one first water-blocking yarn 2, a cable core 3, a water-blocking element 7 and an outer sheath 8. The first water-blocking yarn 2 is wrapped around the outer surface of the central reinforcing member 1. The cable core 3 is arranged at the outer surface of the central reinforcing member 1, and the cable core 3 comprises four SZ stranded loose tubes 4 and two SZ stranded filler ropes 5. The four loose tubes 4 and two filler ropes 5 roughly form a perfect circle on the outer surface of the central reinforcing member 1. The loose tube 4 adopts a dry type loose tube and contains 1 to 48 optical fibers 6. The outer sheath 8 is arranged on the outer side of the cable core 3. The water-blocking element 7 adopts two second water-blocking yarns, and the two second water-blocking yarns are evenly distributed along the circumferential direction of the cable core 3. The second water-blocking yarn is placed flat between the cable core 3 and the outer sheath 8. The outer surface of the outer sheath 8 is convexly provided with two cable opening marking lines 9, which extend axially along the outer sheath 8, and are evenly arranged along the circumferential direction of the outer sheath 8.

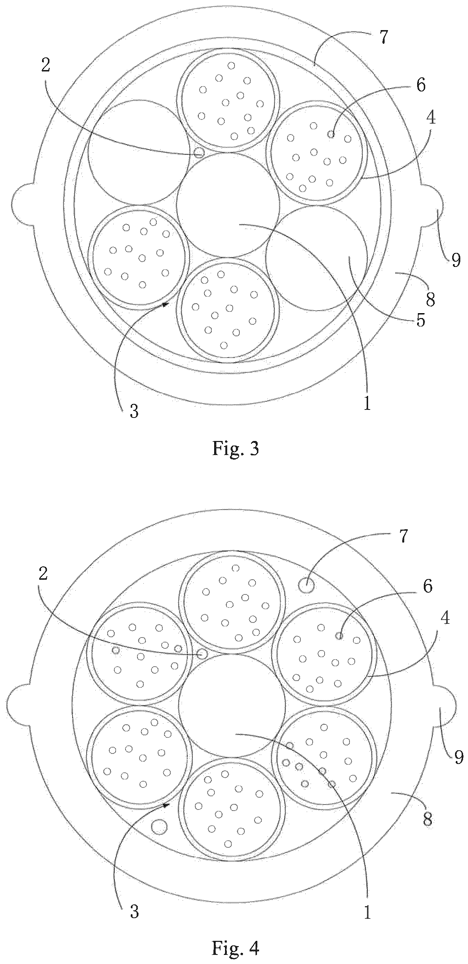

As shown in Fig. 3, the third embodiment of the present invention provides a binding-yarn-layer-free stranded optical cable, comprising a central reinforcing member 1, one first water-blocking yarn 2, a cable core 3, a water-blocking element 7 and an outer sheath 8. The first water-blocking yarn 2 is wrapped around the outer surface of the central reinforcing member 1. The cable core 3 is arranged at the outer surface of the central reinforcing member 1, and the cable core 3 comprises four SZ stranded loose tubes 4 and two SZ stranded filler ropes 5. The four loose tubes 4 and two filler ropes 5 roughly form a perfect circle on the outer surface of the central reinforcing member 1. The loose tube 4 adopts a dry type loose tube and contains 1 to 48 optical fibers 6. The outer sheath 8 is arranged on the outer side of the cable core 3. The water-blocking element 7 adopts a water-blocking tape, and the water blocking tape is longitudinally wrapped between the cable core 3 and the outer sheath 8. The outer surface of the outer sheath 8 is convexly provided with two cable opening marking lines 9, which extend axially along the outer sheath 8, and are evenly arranged along the circumferential direction of the outer sheath 8.

As shown in Fig. 4, the fourth embodiment of the present invention provides a binding-yarn-layer-free stranded optical cable, comprising a central reinforcing member 1, one first water-blocking yarn 2, a cable core 3, a water-blocking element 7 and an outer sheath 8. The first water-blocking yarn 2 is wrapped around the outer surface of the central reinforcing member 1. The cable core 3 is arranged at the outer surface of the central reinforcing member 1, and the cable core 3 comprises six SZ stranded loose tubes 4. The six loose tubes 4 roughly form a perfect circle on the outer surface of the central reinforcing member 1. The loose tube 4 adopts a dry type loose tube and contains 1 to 48 optical fibers 6. The outer sheath 8 is arranged on the outer side of the cable core 3. The water-blocking element 7 adopts two second water-blocking yarns, and the two second water-blocking yarns are evenly distributed along the circumferential direction of the cable core 3. The second water-blocking yarn is placed flat between the cable core 3 and the outer sheath 8. The outer surface of the outer sheath 8 is convexly provided with two cable opening marking lines 9, which extend axially along the outer sheath 8, and are evenly arranged along the circumferential direction of the outer sheath 8.

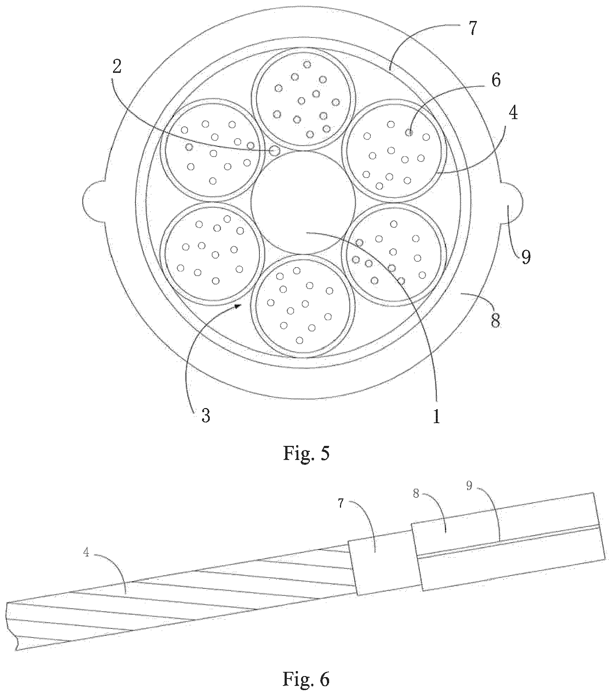

As shown in Fig. 5 and Fig.6, the fifth embodiment of the present invention provides a binding-yarn-layer-free stranded optical cable, comprising a central reinforcing member 1, one first water-blocking yarn 2, a cable core 3, a water-blocking element 7 and an outer sheath. The first water-blocking yarn 2 is wrapped around the outer surface of the central reinforcing member 1. The cable core 3 is arranged at the outer surface of the central reinforcing member 1, and the cable core 3 comprises six SZ stranded loose tubes 4. The six loose tubes 4 roughly form a perfect circle on the outer surface of the central reinforcing member 1. The loose tube 4 adopts a dry type loose tube and contains 1 to 48 optical fibers 6. The outer sheath 8 is arranged on the outer side of the cable core 3. The water-blocking element 7 adopts a water-blocking tape, and the water blocking tape is longitudinally wrapped between the cable core 3 and the outer sheath 8. The outer surface of the outer sheath 8 is convexly provided with two cable opening marking lines 9, which extend axially along the outer sheath 8, and are evenly arranged along the circumferential direction of the outer sheath 8.

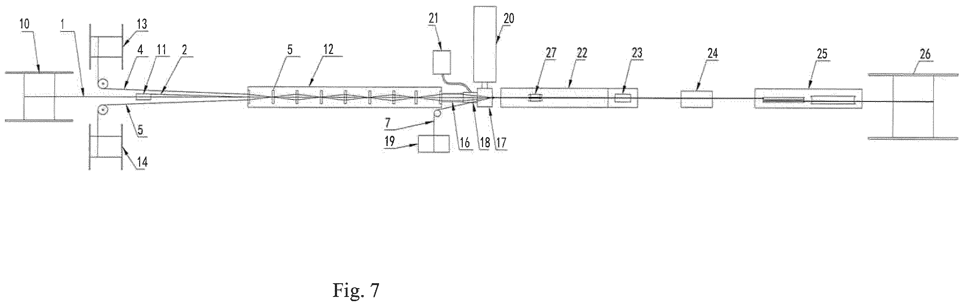

As shown in Fig. 7, the sixth embodiment of the present invention provides a method for manufacturing a binding-yarn-layer-free stranded optical cable, comprising the following steps:
discharging the central reinforcing member 1 from a reinforcement pay-off rack 10;
discharging the first water-blocking yarn 2 by rotation from a first yarn-putting rack 11, wrapping around the central reinforcing member 1, and the central reinforcing member 1 wrapped with the first water-blocking yarn 2 entering a center hole of a stranding machine 12;
respectively discharging m loose tubes 4 and n filler ropes 5 from a loose tube pay-off rack 13 and a filler rope pay-off rack 14, and successively and parallelly passing through a stranding plate 15 and a stranding head 16 of the stranding machine 12;
performing SZ reciprocating rotation on the stranding plate 15 and the stranding head 16, stranding the loose tubes 4 and the filler ropes 5 into the cable core 3, and the cable core 3 being wrapped on the outer surface of the central reinforcing member 1;
providing a negative pressure pumping mould 18 between the stranding head 16 and an extruder head 17;
discharging the water-blocking element 7 from a second yarn-putting rack 19, passing the water-blocking element 7 through the negative pressure pumping mould 18 and parallelly entering the extruder head 17 with the cable core 3;
starting a negative pressure pumping fan 21, pumping the inside of the extruder head 17 to negative pressure, starting the extruder 20, extruding the material of the molten outer sheath such as polyethylene PE, polyvinyl chloride PVC, polyurethane TPU, polyamide PA or flame-retardant polyolefin low smoke zero halogen (LZSH) from the extruder head 17 and coating on the cable core 3 and the water-blocking element 7 to form the outer sheath 8, thereby obtaining the optical cable; the advantage of pumping the inside of the extruder head 17 to negative pressure is that the outer sheath material can be tightly wrapped on the cable core 3, so as to fix the loose tubes 4 and the filler ropes 5 of the cable core 3, and prevent the back-twist pitch of the cable core 3 from becoming larger;
cooling and shaping the optical cable by a water channel 22 with a length of 4m to 40m, after completely cooling, drying the optical cable by a dryer 23, installing a torsion damper 27 that can translate left and right in the water channel 22 to clamp the optical cable that is not sufficiently cooled, thereby preventing the inner cable core 3 from twisting back when the inner cable core 3 is not completely fixed, and also preventing the molten outer sheath material at the right exit of the extruder head 17 from being deformed by the movement of the cable core 3, resulting in bulging on the outside; through measuring the pitch of the cable core in the water channel 22, translating the torsion damper 27 left and right to obtain the required stranding pitch;
then printing on the surface of the optical cable by means of a printer 24;
pulling the optical cable to a take-up reel 26 by means of a take-up tractor 25 and winding the optical cable up.

To sum up, during the manufacturing process, the present invention cancels the SZ stranded binding-yarn process, which can save the yarn cost used for the binding yarn, and also prevent the loose tubes from being spreading out and the outer diameter of the optical cable from being changed when the tension of the binding yarn is too small, and prevent the loose tubes from being flattened and transmission attenuation of the optical fiber from exceeding the standard when the tension of the binding yarn is too large.

The present invention combines the stranding process and the sheathing process, saving one production process, compressing production site, and reducing equipment cost and labor cost.

When the outer sheath is extruded, the cable opening marking line can be extruded directly, which can save the cost of the cable opening.

The present invention is not limited to the above-mentioned embodiments. One skilled in the art may make several improvements and modifications without departing from the principle of the present invention, and these improvements and modifications are also considered to be within the protection scope of the present invention. The contents that are not described in detail in the description belong to the prior art well known by one skilled in the art.

## Claims

1. A binding-yarn-layer-free stranded optical cable, comprising:
a central reinforcing member (1);
at least one first water-blocking yarn (2), which is wrapped around the outer surface of the central reinforcing member (1);
a cable core (3), which is arranged at the outer surface of the central reinforcing member (1), and comprises m loose tubes (4) and n filler ropes (5), which are SZ stranded, wherein m≥1, n≥0, and the loose tube (4) contains 1 to 48 optical fibers (6);
an outer sheath (8), which is arranged on the outer side of the cable core (3); and
a water-blocking element (7), which is arranged between the cable core (3) and the outer sheath (8).

2. The binding-yarn-layer-free stranded optical cable according to claim 1, wherein the water-blocking element (7) adopts a second water-blocking yarn.

3. The binding-yarn-layer-free stranded optical cable according to claim 2, wherein when the number of the second water-blocking yarn is not less than two, the second water blocking yarn is evenly distributed along the circumferential direction of the cable core (3).

4. The binding-yarn-layer-free stranded optical cable according to claim 1, wherein the water-blocking element (7) adopts a water-blocking tape.

5. The binding-yarn-layer-free stranded optical cable according to claim 1, wherein the number m of the loose tubes (4) is 6, and the number n of the filler ropes (5) is 0; or the number m of the loose tubes (4) is 4, and the number n of the filler ropes (5) is 2.

6. The binding-yarn-layer-free stranded optical cable according to claim 1, wherein the outer surface of the outer sheath (8) is convexly provided with a cable opening marking line (9), and the cable opening marking line (9) extends axially along the outer sheath (8).

7. The binding-yarn-layer-free stranded optical cable according to claim 1, wherein the materials used for the central reinforcing member (1) comprise a single metal or a fiber reinforced polymer (FRP).

8. The binding-yarn-layer-free stranded optical cable according to claim 1, wherein the loose tube (4) adopts a dry type or a grease-filled loose tube.

9. The binding-yarn-layer-free stranded optical cable according to claim 1, wherein the materials used for the loose tube (4) comprise at least one of polybutylene terephthalate (PBT), polycarbonate (PC), polypropylene (PP), polyethylene terephthalate (PET), and thermoplastic polyester elastomer (TPEE).

10. The binding-yarn-layer-free stranded optical cable according to claim 1, wherein the materials used for the outer sheath (8) comprise polyethylene (PE), polyvinyl chloride (PVC), polyurethane (TPU), polyamide (PA) or low smoke zero halogen flame retardant polyolefin (LZSH).

11. A method for manufacturing a binding-yarn-layer-free stranded optical cable according to claim 1, comprising the following steps:
discharging the central reinforcing member (1) from a reinforcement pay-off rack (10);
discharging the first water-blocking yarn (2) by rotation from a first yarn-putting rack (11), wrapping around the central reinforcing member (1), and the central reinforcing member (1) wrapped with the first water-blocking yarn (2) entering a center hole of a stranding machine (12);
respectively discharging m loose tubes (4) and n filler ropes (5) from a loose tube pay-off rack (13) and a filler rope pay-off rack (14), and successively and parallelly passing through a stranding plate (15) and a stranding head (16) of the stranding machine (12);
performing SZ reciprocating rotation on the stranding plate (15) and the stranding head (16), stranding the loose tubes (4) and the filler ropes (5) into the cable core (3), and the cable core (3) being located on the outer surface of the central reinforcing member (1);
providing a negative pressure pumping mould (18) between the stranding head (16) and an extruder head (17);
discharging the water-blocking element (7) from a second yarn-putting rack (19), passing the water-blocking element (7) through the negative pressure pumping mould (18) and parallelly entering the extruder head (17) with the cable core (3);
starting a negative pressure pumping fan (21), pumping the inside of the extruder head (17) to negative pressure, starting an extruder (20), extruding the material of the molten outer sheath from the extruder head (17) and coating on the cable core (3) and the water-blocking element (7) to form the outer sheath (8), thereby obtaining the optical cable.

12. The method for manufacturing a binding-yarn-layer-free stranded optical cable according to claim 11, wherein the method further comprises the following steps:
cooling and shaping the optical cable through a water channel (22) and drying; and
pulling the optical cable to a take-up reel (26) to wind up.
